# EUROPEAN PATENT SPECIFICATION

(11) **EP 0 563 810 B1**
(45) Date of publication and mention of the grant of the patent: **28.08.1996**
(21) Application number: 93105002.5
(22) Date of filing: 26.03.1993
(51) Int. Cl.: B60G 3/28, B60G 11/10

(54) **A suspension device for a pair of steered front wheels for a commercial vehicle**
Radaufhängungsvorrichtung für einen lenkbaren Vorderradsatz eines Nutzfahrzeuges
Dispositif de suspension d'une paire de roues avant directrices pour un véhicule utilitaire

(30) Priority: 02.04.1992 IT TO920299
(43) Date of publication of application: 06.10.1993
(73) Proprietor: IVECO FIAT S.p.A., I-10156 Torino (IT)
(72) Inventor: Dal Col, Vittorio, I-10099 San Mauro Torinese (Torino) (IT)
(74) Representative: Marchitelli, Mauro

(56) References cited:
- EP-A- 0 195 538
- WO-A-91/04875
- DE-A- 1 555 348
- DE-A- 4 126 128
- FR-A- 787 569
- FR-A- 2 484 926
- GB-A- 2 111 922
- US-A- 2 496 906
- US-E- 23 401

## Description

The present invention relates in general to motor-vehicle suspensions and, more particularly, to a suspension device for a pair of steered front wheels for a commercial vehicle.

In the field of medium and heavy commercial vehicles, the front wheels conventionally have rigid-axle suspension systems, unlike light vehicles (motor cars) in which the system generally used up to now consists of independent suspension. The reason why the latter arrangement has gradually become established in the case of light vehicles lies in the fact that, in comparison with rigid-axle suspensions, it has many advantages which may be summarised as follows:
- the wheels move independently, improving travelling comfort,
- the unsprung masses are reduced, improving comfort as well as road-holding,
- the travel of the wheel is greater and the flexibility of the resilient elements can therefore be increased,
- the gyroscopic moment is not transmitted to the steering system,
- the characteristic attitude angles of the wheels are affected less by operating conditions, resulting in greater stability in motion,
- the suspension has greater roll stiffness so that the stiffness of any stabiliser bars can be reduced.

On the other hand, known independent suspensions are more expensive than rigid-axle arrangements and are not suitable for application to medium and heavy vehicles with frame formed by longitudinal side members, conventionally of channel-shaped cross-section.

This is essentially due to the fact that, in independent suspensions the stub axle of the steered wheel is subject to lateral forces which are proportional to the load, even when travelling in a straight line; since these forces must be discharged onto the frame or onto a cross-member fixed to the frame , it follows that:
- the frame can withstand such forces only by undergoing large deformations which, amongst other things, involve considerable variations in the camber of the wheels,
- in order to have the necessary stiffness, the cross-member has to be extremely strong and therefore heavy and expensive.

German patent document DE-A-41 26 128 discloses a suspension system having lower and upper transverse arms (24, 26) that connect the wheels to the suspension chassis (12) of the vehicle, and a single transverse leaf spring (28) with ends attached to connecting rods (32) which attach to the wheels in order to provide spring suspension. However, the suspension system of DE-A-41 26 128 is a rather complex arrangement and is specifically directed to unsteered rear wheel suspension. It is not adapted for front wheel suspension of commercial vehicles, as is the present invention.

The object of the present invention is to provide a suspension arrangement which has the advantages of independent suspensions but is also suitable for application to medium and heavy commercial vehicles and, at the same time, limits the increase in costs in comparison with rigid-axle configurations.

According to the invention, this object is achieved by the subject-matter of claim 1. A suspension device for a pair of steered front wheels for a commercial vehicle which has a frame including two longitudinal side members, and in which each wheel has a respective stub axle, comprises in combination:-
- upper and lower transverse arms which connect the stub axle of each wheel pivotably to a respective side member of the frame of the vehicle,
- a single transverse leaf spring built up with one or more leaves disposed between the wheels substantially at the level of the lower transverse arms,
- a pair of connecting rods which connect the ends of the leaf spring to the upper transverse arms of the two wheels, and
- resilient means for connecting the leaf spring to each side member of the frame of the vehicle, near the ends of the leaf spring,
whereby the upper and lower transverse arms, the single transverse leaf spring and the pair of connecting rods are arranged substantially in the same vertical and transverse plane.

Conveniently, the two connecting rods are inclined so that the lateral forces reacting on the attachments connecting the upper transverse arms to the side members of the frame under various loading conditions are minimised because the lateral forces on the upper joints of the stub axles are counterbalanced by the transverse components of the forces transmitted along the connecting rods by the leaf spring.

According to a preferred embodiment of the invention, the resilient connection means for the leaf spring conveniently include a bracket which projects beneath each side member and carries a pair of opposed resilient pads between which the leaf spring extends.

The lower brackets are preferably interconnected by a cross member.

Moreover, the lower transverse arms may be articulated to the brackets and the upper transverse arms are articulated to respective attachment elements fixed to the brackets at the sides of the two side members.

By virtue of this arrangement, the suspension device according to the invention can counterbalance lateral forces acting on the upper joints of the stub axles of the two steered wheels under one loading condition, preferably that of a static load.

The counterbalancing may not be perfect under other operating conditions but the remaining force which has not been counterbalanced is, in any case, such that the side members of the frame of the vehicle can withstand it without appreciable sideways bending.

The suspension according to the invention has all the advantages of independent suspensions except for fully independent movement of the two wheels; because of the presence of the transverse leaf spring, it constitutes a semi-independent solution. The suspension is characterised by even greater roll stiffness than independent suspensions, however, because of the greater stiffness of the transverse leaf spring which is constrained to assume an "S"-shaped elastic deformation curve, enabling the stabiliser bar to be eliminated or at any rate drastically reduced in size.

Moreover, since the front wheels of a commercial vehicle are never excessively overloaded, the leaf spring may be formed of a composite material with advantages as regards the reduction of the overall mass (not only of the unsprung mass) without the disadvantages connected with the excessive lateral flexibility typical of leaf springs made of composite materials (the movements of the wheels are guided by the transverse arms).

A further advantage of the solution according to the invention lies in the fact that the entire forecarriage can be assembled off the assembly line and fitted on the frame in one piece, already adjusted.

Further characteristics and advantages of the invention will become clear in the course of the detailed description which follows with reference to the appended drawings, provided purely by way of non-limiting example, in which:

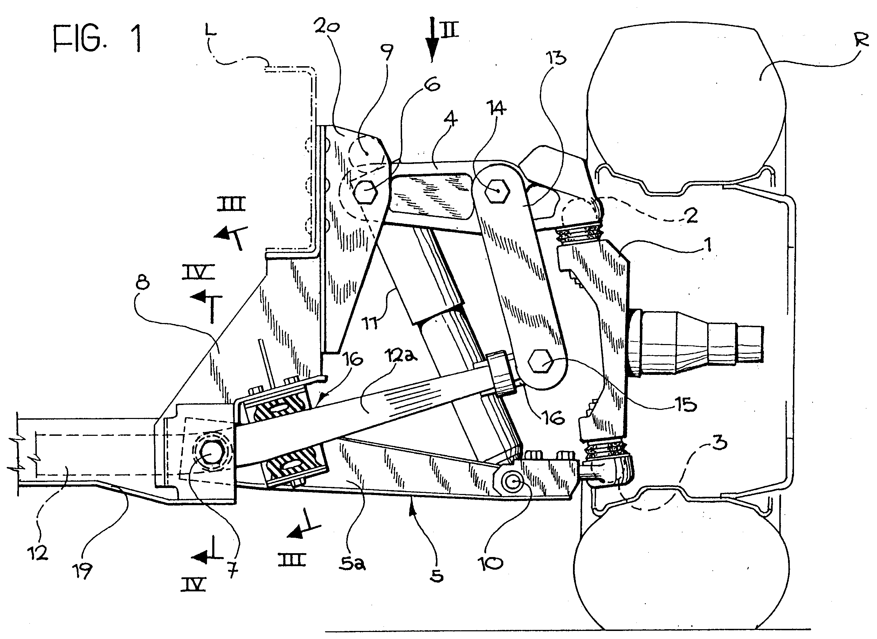

Figure 1 is a schematic, partially-sectioned, front elevational view of a portion of a suspension device for commercial vehicles according to the invention,

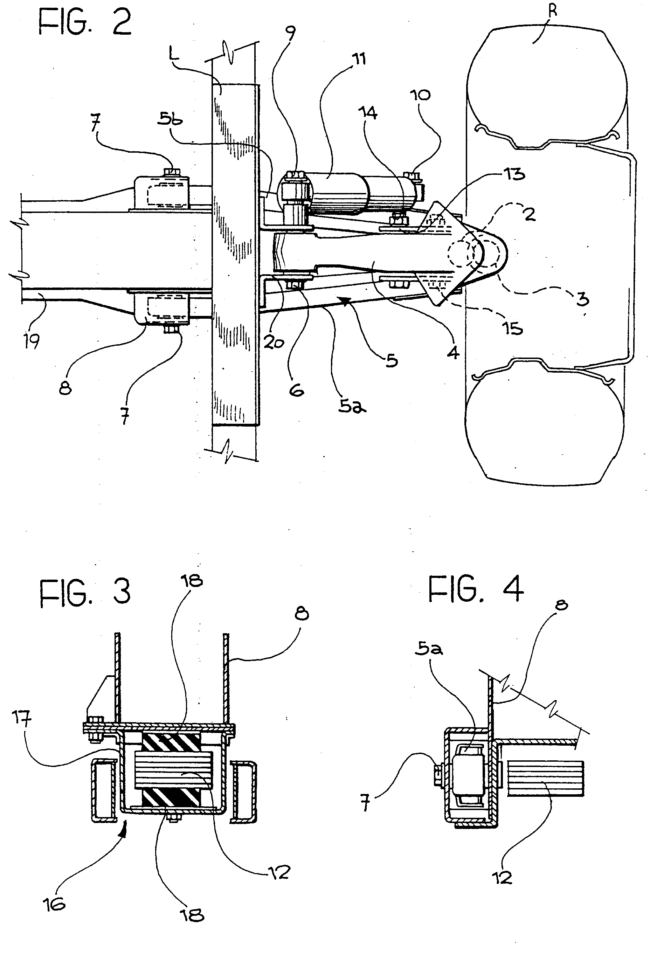

Figure 2 is a plan view taken on the arrow II-II of Figure 1,
Figure 3 is a cross-section taken on the line III-III of Figure 1, and
Figure 4 is a cross-section taken on the line IV-IV of Figure 1.

In the drawings, the transmission device according to the invention is shown with reference to only one of the steered front wheels R of a commercial vehicle having a frame which, in conventional manner, includes longitudinal side members L of channel-shaped cross-section. The arrangement of the other steered front wheel corresponds specularly to that shown and the following description therefore applies in an identical manner to both wheels.

The wheel R is mounted, also in conventional manner, on a stub axle, generally indicated 1, having a steering arm (not shown) for connection to a steering mechanism (also not shown), for example, of the rack type, still in conventional manner.

The ends of the stub axle 1 carry upper and lower ball joints 2 and 3 to which one end of an upper transverse pivoting arm 4 and one end of a lower transverse pivoting arm 5 are articulated, respectively.

The other end of the upper transverse arm 4 is articulated to a longitudinal pin 6 carried by a forked attachment element 20 fixed rigidly to the outer side of the side member L in the manner explained below. Alternatively, the upper arm 4 could be in the form of a wishbone with two arms articulated to respective forked attachments, also fixed to the outer side of the side member L and spaced apart longitudinally.

The lower transverse arm 5 is in the form of a wishbone with two arms 5a, 5b whose ends furthest from the ball joint 3 are articulated about respective longitudinal pins 7 to a bracket 8 which projects beneath the side member L and is fixed rigidly thereto, or to the bracket 8 and to a further bracket (not shown), both projecting below the side member and fixed rigidly thereto. The fixing is conveniently achieved by the same members (screws or the like) which are used for fixing the attachment 20.

The upper end of a telescopic shock-absorber, indicated 11, is articulated to a longitudinal pin 9 carried by the attachment 20 above the pin 6 and its lower end is articulated to a longitudinal pin 10 carried by the lower transverse arm 5.

The resilient suspension member is constituted by a single leaf spring 12, built up with one or more leaves, for example, of composite material, extending transversely between the two wheels R substantially at the level of the lower transverse arms 5. Each end 12a of the leaf spring 12 is connected to the upper transverse arm 4 of the corresponding wheel R by means of a respective connecting rod 13.

The upper end of each of the connecting rods 13 which, under the static loading conditions of the suspension shown in the drawings, are inclined to the vertical and diverge downwardly, is articulated to an intermediate longitudinal pin 14 carried by the respective upper transverse arm 4 and its lower end is articulated to a longitudinal pin 15 carried by an end attachment 16 fixed to the corresponding end 12a of the leaf spring 12.

The leaf spring 12 is connected near each of its ends 12a to the respective side member L by means of a resilient mounting 16 which is fixed to the respective bracket 8 beside the articulation pins 7 of the lower transverse arm 5. As shown in greater detail in Figure 3, the mounting 16 includes a housing element 17 to which two opposed resilient pads 18 are fixed, the leaf spring 12 extending between the pads 18.

A cross member, indicated 19, connects the two brackets 8 associated with the two wheels R and, in essence, serves simply to fix the rack guide of the steering unit.

By virtue of the arrangement described above, the suspension device according to the invention enables partially independent movement of the two wheels R, ensuring better roll stiffness than with independent suspension. This is due essentially to the fact that, because it is mounted in the manner described above, the transverse leaf spring 12 can assume "S"-shaped elastic deformation curves. The oblique arrangement of the two connecting rods 13 also enables the lateral forces acting on the stub axles 1 of the wheels R to be counterbalanced under static loading conditions and in most operating conditions.

The lateral loads applied to the frame of the vehicle are consequently reduced and there is no need for the side members L to be oversized.

A further advantage of the invention lies in the fact that the suspension and the entire forecarriage of the vehicle can be preassembled off the assembly line and then mounted on the frame of the vehicle in one piece, already adjusted. For this purpose, the components of the suspension (the transverse arms 4 and 5 with the attachment elements 17, the leaf spring 12, the connecting rods 13 and the shock-absorbers 11) and the wheels R, together with the steering system, can be connected to the brackets 8 beforehand and the brackets can then be fixed to the two side members L.

## Claims

1. A suspension device for a pair of steered front wheels (R) for a commercial vehicle which has a frame including two longitudinal side members (L) and in which each wheel has a respective stub axle (1), including in combination:
- upper and lower transverse arms (4, 5) which connect the stub axle (1) of each wheel (R) pivotably to a respective side member (L) of the frame of the vehicle,
- a single transverse leaf spring (12) built up with one or more leaves disposed between the wheels (R) substantially at the level of the lower transverse arms (5),
- a pair of connecting rods (13) which connect the ends (12a) of the leaf spring (12) to the upper transverse arms (4) of the two wheels (R), and
- resilient means (16) for connecting the leaf spring (12) to each side member (L) of the frame of the vehicle, near the ends (12a) of the leaf spring (12), whereby the upper and lower transverse arms (4, 5), the single leaf spring (12) and the pair of connecting rods (13) are arranged substantially in the same vertical and transverse plane of the vehicle.

2. A suspension device according to Claim 1, characterised in that the connecting rods (13) are inclined to the respective upper transverse arms (4) at angles such that the lateral forces reacting on the attachments (20) which connect the upper transverse arms (4) to the side members (L) under operating conditions are minimised because the lateral forces on the upper joints (2) of the stub axles (1 ) are counterbalanced by the transverse components of the forces transmitted along the connecting rods (13) by the leaf spring (12).

3. A suspension device according to Claim 1, characterised in that the resilient means (16) for the leaf spring (12) include a bracket (8) which projects beneath each side member (L) and carries a pair of opposed resilient pads (18), between which the leaf spring (12) extends.

4. A suspension device according to Claim 3, characterised in that it also includes a cross member (19) which interconnects the brackets (8).

5. A suspension device according to Claim 3 or Claim 4, characterised in that at least part of each lower transverse arm (5) is articulated to a respective bracket (8), and in that it also includes attachment elements (20) which are fixed to the brackets (8) and to which the upper transverse arms (4) are articulated.

6. A device according to any one of the preceding claims, characterised in that the transverse arms (4, 5) are substantially V-shaped.

## Patentansprüche

1. Aufhängungsvorrichtung für ein Paar von lenkbaren Vorderrädern (R) eines Nutzfahrzeugs, das ein Chassis besitzt, das zwei längliche Seitenelemente (L) aufweist, wobei jedes Rad einen Achsschenkel (1) besitzt, wobei die Aufhängungsvorrichtung in Kombination enthält:
- einen oberen und unteren Querarm (4, 5), die den Achsschenkel (1) eines jeden Rads (R) schwenkbar mit einem entsprechenden Seitenelement (L) des Fahrzeugchassis verbinden,
- eine einzige querliegende Blattfeder (12), die aus einem oder mehreren Blättern aufgebaut ist, die zwischen den Rädern (R) im wesentlichen auf dem Niveau der unteren Querarme (5) angeordnet sind,
- ein Paar von Verbindungsstangen (13), die die Enden (12a) der Blattfeder (12) mit den oberen Querarmen (4) der beiden Räder (R) verbinden, und
- eine Federeinrichtung (16), um die Blattfeder (12) mit jedem Seitenelement (L) des Fahrzeugchassis in der Nähe der Enden (12a) der Blattfeder (12) zu verbinden, wobei der obere und untere Querarm (4, 5), die einzige querliegende Blattfeder (12) sowie das Paar von Verbindungsstangen (13) im wesentlichen in der gleichen Vertikal- und Querebene des Fahrzeugs angeordnet sind.

2. Aufhängungsvorrichtung gemäß Anspruch 1, dadurch gekennzeichnet, daß die Verbindungsstangen (13) zu den entsprechenden oberen Querarmen (4) unter Winkeln geneigt sind, so daß jene Seitenkräfte, die auf die Befestigungseinrichtungen (20) wirken, die die oberen Querarme (4) mit den Seitenelementen (L) verbinden, unter Betriebsbedingungen minimiert werden, da den Seitenkräften auf die oberen Gelenke (2) der Achsschenkel (1) die Querkomponenten jener Kräfte entgegenwirken, die entlang der Verbindungsstangen (13) von der Blattfeder (12) übertragen werden.

3. Aufhängungsvorrichtung gemäß Anspruch 1, dadurch gekennzeichnet, daß die Federeinrichtung (16) für die Blattfeder (12) eine Halterung (8) aufweist, die unterhalb eines jeden Seitenelements (L) vorspringt und ein Paar von gegenüberliegenden elastischen Blöcken (18) trägt, zwischen denen die Blattfeder (12) verläuft.

4. Aufhängungsvorrichtung gemäß Anspruch 3, dadurch gekennzeichnet, daß die Aufhängungsvorrichtung weiters ein Querelement (19) aufweist, das die Halterungen (8) miteinander verbindet.

5. Aufhängungsvorrichtung gemäß Anspruch 3 oder 4, dadurch gekennzeichnet, daß zumindest ein Teil eines jeden unteren Querarms (5) in einer entsprechenden Halterung (8) gelenkig gelagert ist, und daß die Aufhängungsvorrichtung weiters Befestigungselemente (20) aufweist, die an den Halterungen (8) angebracht sind, und in denen die oberen Querarme (4) gelenkig gelagert sind.

6. Vorrichtung gemäß irgendeinem der bisherigen Ansprüche, dadurch gekennzeichnet, daß die Querarme (4, 5) im wesentlichen V-förmig ausgebildet sind.

## Revendications

1. Dispositif de suspension pour une paire de roues avant directrices (R) pour un véhicule utilitaire qui comporte un châssis comprenant deux longerons latéraux (L), et dans lequel chaque roue comporte une fusée respective (1), comprenant en combinaison :
- des bras transversaux supérieur et inférieur (4, 5) qui relient de manière pivotante la fusée (1) de chaque roue (R) à un longeron latéral respectif (L) du châssis du véhicule,
- un ressort transversal unique à lame (12) se composant d'une ou plusieurs lames placé entre les roues (R) essentiellement au niveau des bras transversaux inférieurs (5),
- une paire de biellettes (13) qui relient les extrémités (12a) du ressort à lame (12) aux bras transversaux supérieurs (4) des deux roues (R), et
- des moyens de résilience (16) destinés à relier le ressort à lame (12) à chaque longeron latéral (L) du châssis du véhicule, près des extrémités (12a) du ressort à lame (12), par lesquels les bras transversaux supérieurs et inférieurs (4, 5), le ressort transversal unique à lame (12) et la paire de biellettes (13) sont disposés essentiellement dans le même plan vertical et transversal du véhicule.

2. Dispositif de suspension selon la revendication 1 caractérisé en ce que les deux biellettes (13) sont inclinées vers les bras transversaux supérieurs respectifs (4) selon des angles tels que les forces latérales réagissant sur les fixations (20) qui relient les bras transversaux supérieurs (4) aux longerons (L) sous diverses conditions d'utilisation sont réduites au minimum parce que les forces latérales s'exerçant sur les joints supérieurs (2) des fusées (1) sont compensées par les composantes transversales des forces transmises le long des biellettes (13) par le ressort à lame (12).

3. Dispositif de suspension selon la revendication 1, caractérisé en ce que les moyens de résilience (16) du ressort à lame (12) comprennent un support (8) en saillie en dessous de chaque longeron latéral (L) et supporte une paire de cales de support opposées (18) entre lesquelles passe le ressort à lame (12).

4. Dispositif de suspension selon la revendication 3, caractérisé en ce qu'il comprend également une traverse (19) qui relie entre eux les supports (8).

5. Dispositif de suspension selon la revendication 3 ou la revendication 4, caractérisé en ce qu'au moins une partie de chaque bras transversal inférieur (5) s'articule sur un support respectif (8), et en ce qu'il comprend également des éléments de fixation (20) qui sont fixés sur les supports (8) et sur lesquels s'articulent les bras transversaux supérieurs (4).

6. Dispositif selon quelqu'une des revendications précédentes, caractérisé en ce que les bras transversaux (4, 5) sont essentiellement en forme de V.
